Europäisches Patentamt

European Patent Office

Office européen des brevets

(11) Veröffentlichungsnummer: **0 255 636**
B1

(12) **EUROPÄISCHE PATENTSCHRIFT**

(45) Veröffentlichungstag der Patentschrift:
25.04.90

(21) Anmeldenummer: 87110410.5

(22) Anmeldetag: **17.07.87**

(51) Int. Cl.⁴: **G01H 3/00**, G01H 11/08

(54) **Sensor für akustische Stosswellenimpulse.**

(30) Priorität: **30.07.86 DE 3625820**

(43) Veröffentlichungstag der Anmeldung:
**10.02.88 Patentblatt 88/6**

(45) Bekanntmachung des Hinweises auf die Patenterteilung:
**25.04.90 Patentblatt 90/17**

(84) Benannte Vertragsstaaten:
**DE FR GB NL**

(56) Entgegenhaltungen:
**EP-A- 0 086 531**
**EP-A- 0 179 983**

**ACUSTICA, Band 58, Nr. 4, 1985, Seiten 215-222, Stuttgart, DE; M. MULLER et al.: "Einsatz einer breitbandigen Piezodrucksonde auf PVDF-Basis zur Untersuchung konvergierender Stosswellen in Wasser"**

(73) Patentinhaber: **Siemens Aktiengesellschaft, Wittelsbacherplatz 2, D-8000 München 2(DE)**

(72) Erfinder: **Rochling, Hans, Spiegelgraben 41, D-8600 Bamberg(DE)**
Erfinder: **Schlee, Karl-Heinz, Dipl.-Ing. (FH), Nürnberger Strasse 18, D-8524 Neunkirchen(DE)**

**Beschreibung**

Die Erfindung betrifft einen Sensor für akustische Stoßwellenimpulse mit einer piezoelektrischen Meßfolie. Ein solcher Sensor kann insbesondere in der Lithotripsie, das heißt z.B. bei der Nierensteinzertrümmerung mittels Stoßwellen, eingesetzt werden.

Ein solcher Sensor ist beispielsweise aus der EP-A 0 179 983 bekannt. Der dort beschriebene Stoßwellensensor wird zur Messung der Druckamplituden des Stoßwellenimpulses in einem Ausbreitungsmedium, bevorzugt in Wasser, verwendet. Ein wichtiges Anwendungsgebiet ist hierfür die Messung des Druckes im Brennpunkt von fokussierten Stoßwellen. Es wird in dieser Druckschrift nicht darauf eingegangen, wie man außerhalb des Ausbreitungsmediums, also beispielsweise bei einer LithotripsieAnwendung und sogenannter "trockener Ankopplung" des Patienten, den Sensor aufbauen muß. Ebenfalls wird nicht auf Schwierigkeiten eingegangen, die sich dadurch ergeben, daß die von der piezoelektrischen PVDF-Meßfolie ermittelten Meßwerte durch Nebenursachen, wie beispielsweise beim Umwälzen des Kopplungsmediums Wasser mittels Pumpen oder durch Strömungen und Wellen des Ausbreitungsmediums, die bei der Stoßwellen-Weiterleitung entstehen, verfälscht werden. PVDF= Polyvinyldenfluorid.

In der EP-A 0 086 531 ist eine Anordnung zur Untersuchung mit Ultraschall beschrieben, die einen Ultraschallsender und einen piezoelektrische Polymer-Folie enthaltenden Ultraschallempfänger aufweist. Die bekannte Anordnung besitzt ein topfförmiges Gehäuse, in dessen Boden der Ultraschallsender aufgenommen ist.

Die offene Seite des Gehäuses ist von einem akustischen Fenster in Form einer dünnen Folie abgeschlossen, die die Druckunterschiede zwischen außen und innen auffängt. Zwischen dem akustischen Fenster und dem in dem Boden des Gehäuses aufgenommenen Ultraschallsender ist die piezoelektrische Folie am Gehäuse eingespannt. Zwischen dem akustischen Fenster und der piezoelektrischen Folie sowie zwischen der piezoelektrischen Folie und dem den Ultraschallsender aufnehmenden Boden befindet sich ein akustisches Kopplungsmedium.

Die Anwendung von sogenannten Stoßwellenrohren in der Lithotripsie ist bekannt, vergleiche DE-OS 3 328 051.

Aufgabe der Erfindung ist es, einen Sensor der eingangs genannten Art so auszubilden, daß unabhängig von seinem Einsatzort definierte Meßbedingungen vorliegen. Es soll also möglich sein, mit dem Sensor die von einer unabhängigen Quelle ausgesandte Stoßwelle zu messen. Der Sensor soll dabei u.U. auch an eine solche Quelle ankoppelbar oder aber in ein Meßbecken einbringbar sein. Insbesondere soll er sich für die trockene Ankopplung bei einem Lithotripter eignen.

Diese Aufgabe wird erfindungsgemäß dadurch gelöst, daß die Meßfolie zwischen zwei Ankoppelfolien angeordnet ist, und daß der Zwischenraum zwischen den Ankoppelfolien mit einem Kopplungsmedium für die Übertragung des akustischen Stoßwellenimpulses gefüllt ist.

Ist der Sensor beispielsweise innerhalb des Ausbreitungsmediums der Vorlaufstrecke eines Lithotripters angeordnet, so wird durch die Anordnung der Ankoppelfolien oder -membranen auf je einer Seite der Meßfolie verhindert, daß Strömungen oder Wellen, die sich in der Vorlaufstrecke ausbreiten, Einfluß auf die Meßfolie ausüben. Vorteilhaft ist es dabei, wenn die Meßfolie sich in einer geschlossenen Kapsel befindet, so daß auch Wellen im Ausbreitungsmedium, die in Richtung der Folienebene verlaufen, von der Meßfolie ferngehalten werden.

Ist der Sensor beispielsweise in Verbindung mit einem Stoßwellengenerator mit sogenannter "trockener Ankopplung", d. h. ohne Patientenwanne, in der Lithotripsie eingesetzt, so befindet er sich bei der Meßwertermittlung zwischen einer Abschlußmembran des Stoßwellengenerators einerseits und der Haut des Patienten oder einer Ankoppelscheibe, falls eine solche vorgesehen ist, andererseits. In diesem Fall werden auf die beiden Ankoppelfolien oder Ankoppelmembranen unterschiedliche Kräfte ausgeübt. Befindet sich nun das Kopplungsmedium im Sensor im Druckausgleich mit beiden Seiten der Meßfolie, d. h. wirkt auf die Meßfolie selbst von beiden Seiten derselbe statische Druck, so wird eine unerwünschte Vorspannung der piezoelektrischen Meßfolie und damit eine Meßungenauigkeit oder sogar Beschädigung des Sensors vermieden. Der Druckausgleich kann z. B. durch eine Durchleitöffnung in einer Scheidewand zwischen den beiden Ankoppelfolien geschaffen werden.

Weitere Vorteile und Ausgestaltungen der Erfindung ergeben sich aus der Beschreibung von Ausführungsbeispielen anhand der Figuren. Es zeigen:

Fig. 1 einen Querschnitt durch einen scheibenförmigen Sensor, der insbesondere in der Lithotripsie eingesetzt wird,

Fig. 2 eine Kontaktierung der Meßfolie in einer Teildarstellung des Sensors und

Fig. 3 einen Sensor mit Einführöffnung für das Koppelmedium in einer weiteren Teildarstellung.

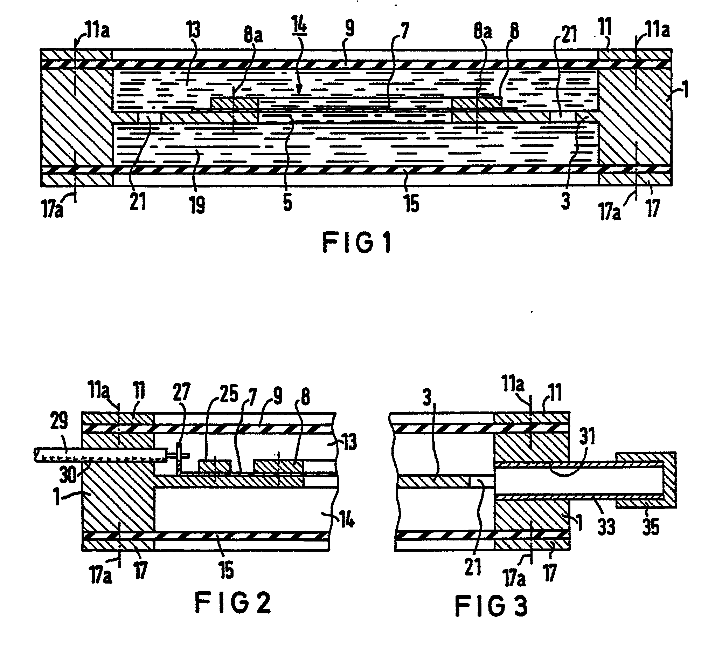

In Fig. 1 ist ein Ring 1 dargestellt, welcher in der Mitte seines inneren Rands und parallel zu seinen beiden Stirnseiten eine Scheidewand 3 aufweist. Die Scheidewand 3 ist mit einer zentralen Öffnung 5 versehen, die von einer piezoelektrischen Meßfolie 7 überdeckt wird. Der Durchmesser der Öffnung 5 und damit die Durchtrittsfläche der Meßfolie 7 für den Stoßwellenimpuls beträgt z. B. ca. 40 mm. Der Ring 1 besteht z. B. aus einem Material wie PVC oder einem anderen Kunststoff. Als Meßfolie 7 wird bevorzugt eine PVDF-Folie verwendet. Die Meßfolie 7 wird von einem Spannring 8 so über der zentralen Öffnung 5 gehalten, daß die Meßfolie 7 faltenfrei die zentrale Öffnung 5 abdeckt. Dazu können beispielsweise konventionelle Kunststoffschrauben 8a durch den Spannring 8 geführt und in die Scheidewand 3 eingeschraubt werden. Auch andere Befestigungen können gewählt werden.

Am stirnseitigen oberen Rand des Ringes 1 ist eine erste Ankoppelfolie oder Ankoppelmembran 9 von einem ersten Haltering 11 durch Befestigungsmittel 11a eingespannt. Die Ankoppelfolie 9 ist beispielsweise aus Gummi, bevorzugt Silikon- oder EPDM-Gummi gefertigt mit einer Stärke zwischen 1 mm und 2 mm und einem Durchmesser von ca. 120 mm. Die Ankoppelfolie 9 ist so zwischen der Stirnseite des Ringes 1 und dem Haltering 11 eingespannt, daß sie das Innere des Ringes 1 faltenfrei in leicht gespanntem Zustand abdeckt.

Es bildet sich somit zwischen der ersten Ankoppelfolie 9 einerseits und der Scheidewand 3 zusammen mit der Meßfolie 7 andererseits ein scheibenartiger erster Zwischenraum 13, der randseitig von dem Ring 1 begrenzt ist. Der Zwischenraum 13 ist mit einem Kopplungsmedium 14 für akustische Stoßwellen, z. B. mit entgastem destillierten Wasser gefüllt. Als Füllung kommen ebenfalls Öle, wie beispielsweise Rizinusöl, infrage.

Die Konfiguration von erster Ankoppelfolie 9, erstem Haltering 11 und erstem Zwischenraum 13 ist spiegelbildlich auch auf der unteren Seite des Sensors vorgesehen. Dort ist somit eine zweite Ankoppelfolie 15, z.B. ebenfalls aus Gummi, von einem zweiten Haltering 17 gegen die untere Stirnfläche des Rings 1 durch Befestigungsmittel 17a fixiert. Dadurch wird ein zweiter Zwischenraum 19 gebildet, welcher analog zur oberen Kammer des Sensors ausgeführt ist. Auch er ist mit dem Kopplungsmedium 14 gefüllt. Die nicht-eingespannten Teile der Ankoppelfolien 9, 15 haben z. B. einen Durchmesser von ca. 100 mm. Zumindest eine der Ankoppelfolien 9, 15 sollte aus einem optisch durchsichtigen Material bestehen, um eine Beobachtung von außen zu gewährleisten.

Der erste Zwischenraum 13 ist mit dem zweiten Zwischenraum 19 über eine oder bevorzugt mehrere Durchleitöffnungen 21 in der Scheidewand 3 verbunden. Durch die Durchleitöffnung 21 findet ein Druckausgleich zwischen dem ersten und dem zweiten Zwischenraum 13 bzw. 19 statt. Auf diese Weise ist sichergestellt, daß die Meßfolie 7, die etwa in der Mitte zwischen den Ankoppelfolien 9, 15 angeordnet ist, beidseitig mit dem gleichen statischen Druck belastet wird und nicht einseitig vorgespannt ist. Der beschriebene Sensor kann als Ganzes in die Vorlaufstrecke eines Stoßwellengenerators eines Lithotripters eingesetzt werden, wobei sich trotz Strömungen und Wellen, die innerhalb der Vorlaufstrecke auftreten, kein störender Einfluß auf die Meßfolie 7 einstellt. Auch kann der Sensor zwischen einer Ankoppelmembran (nicht gezeigt) und einem Patienten plaziert werden.

In Fig. 2 ist eine mögliche Vorgehensweise bei der Kontaktierung der Meßfolie 7 dargestellt. Die über den äußeren Rand des Spannringes 8 hinausgehende Meßfolie 7 ist über eine Klemmverbindung 25, die beispielsweise aus einer durch eine Schraube federnd gehaltenen Andrückplatte und einer daran befestigten Lötfahne 27 besteht, elektrisch angeschlossen. An die Lötfahne ist eine zweipolige Meßleitung 29 angelötet, die durch eine radiale Öffnung 30 im Ring 1 nach außen geführt ist. Dabei ist darauf zu achten, daß zwischen dem Ring 1 und der Meßleitung 29 eine wasserfeste Abdichtung vorgenommen wird.

In Fig. 3 sind gleiche Bauteile mit gleichen Bezugszeichen versehen wie in Fig. 1 und 2.

Der Ring 1 weist auch etwa in seiner Mitte eine Einführöffnung auf, durch welche ein kurzes Rohr oder ein Stutzen 33 geführt ist, der mit dem Ring 1 wasserdicht verbunden ist. An den Stutzen 33 kann ein Schlauch zur Zuführung des Kopplungsmediums angeschlossen werden. Nach Füllen des Zwischenraums 13, 19 mit dem Kopplungsmedium 14 wird der Schlauch entfernt und durch eine Abschlußkappe 35 ersetzt. Die Abschlußkappe 35 verschließt die Einführöffnung 31, so daß sich das Kopplungsmedium 14 nicht mit Substanzen außerhalb des Sensors vermischen kann.

**Patentansprüche**

1. Sensor für akustische Stoßwellenimpulse mit einer piezoelektrischen Meßfolie, **dadurch gekennzeichnet**, daß die Meßfolie (7) zwischen zwei Ankoppelfolien (9, 15) angeordnet ist, und daß der Zwischenraum (13, 19) zwischen den Ankoppelfolien (9, 15) mit einem Kopplungsmedium (14) für die Übertragung des akustischen Stoßwellenimpulses gefüllt ist.

2. Sensor nach Anspruch 1, **dadurch gekennzeichnet**, daß die Meßfolie (7) in der Mitte zwischen den Ankoppelfolien (9, 15) angeordnet ist.

3. Sensor nach Anspruch 1 oder 2, **dadurch gekennzeichnet**, daß die Meßfolie (7) eine PVDF-Folie ist.

4. Sensor nach einem der Ansprüche 1 bis 3, **dadurch gekennzeichnet**, daß zumindest eine der Ankoppelfolien (9, 15) eine Gummifolie ist.

5. Sensor nach einem der Ansprüche 1 bis 4, **dadurch gekennzeichnet**, daß die Ankoppelfolien (9, 15) jeweils stirnseitig in einem Ring (1) eingespannt sind.

6. Sensor nach Anspruch 5, **dadurch gekennzeichnet**, daß der Ring (1) eine Scheidewand (3) mit zentraler Öffnung (5) enthält, und daß die Meßfolie (7) diese Öffnung (5) überdeckt.

7. Sensor nach einem der Ansprüche 1 bis 6, **dadurch gekennzeichnet**, daß die Durchtrittsfläche der Meßfolie (7) einen Durchmesser von ca. 40 mm aufweist.

8. Sensor nach Anspruch 5, 6 oder 7, **dadurch gekennzeichnet**, daß der Ring (1) eine Einführöffnung (31) zur Zuführung des Kopplungsmediums (14) aufweist.

9. Sensor nach Anspruch 8, **dadurch gekennzeichnet**, daß die Einführöffnung (31) verschließbar ist.

10. Sensor nach einem der Ansprüche 1 bis 9, **dadurch gekennzeichnet**, daß das Kopplungsmedium (14) entgastes Wasser ist.

11. Sensor nach einem der Ansprüche 1 bis 10, **dadurch gekennzeichnet**, daß die Meßfolie (7) mit Hilfe einer Klemmverbindung (25) elektrisch kontaktiert ist.

12. Sensor nach Anspruch 11, **dadurch gekennzeichnet**, daß eine Meßleitung (29) an die Klemmverbindung (25) angelötet ist.

13. Sensor nach einem der Ansprüche 1 bis 12, **dadurch gekennzeichnet**, daß die Ankoppelfolien (9, 15) einen Durchmesser von ca. 100 mm aufweisen.

14. Sensor nach einem der Ansprüche 6 bis 12, **dadurch gekennzeichnet**, daß die Scheidewand (3) mindestens eine Durchleitöffnung (21) für das Kopplungsmedium (14) enthält.

## Claims

1. Sensor for acoustic shock wave pulses having a piezo-electric measuring membrane, characterised in that the measuring membrane (7) is arranged between two coupling membranes (9, 15) and in that the intermediate space (13, 19) between the coupling membranes is filled with a coupling medium (14) for transmitting the acoustic shock wave pulse.

2. Sensor according to claim 1, characterised in that the measuring membrane (7) is arranged in the middle between the coupling membranes (9, 15).

3. Sensor according to claim 1 or 2, characterised in that the measuring membrane (7) is a PVDF membrane.

4. Sensor according to one of claims 1 to 3, characterised in that at least one of the coupling membranes (9, 15) is a rubber membrane.

5. Sensor according to one of claims 1 to 4, characterised in that the coupling membranes (9, 15) are each clamped in a ring (1) on the end face.

6. Sensor according to claim 5, characterised in that the ring (1) contains a partition (3) having a central aperture (5), and in that the measuring membrane (7) covers this aperture (5).

7. Sensor according to one of claims 1 to 6, characterised in that the penetration area of the measuring membrane (7) has a diameter of about 40 mm.

8. Sensor according to claim 5, 6 or 7, characterised in that the ring (1) has an introduction aperture (31) for supplying the coupling medium (14).

9. Sensor according to claim 8, characterised in that the introduction aperture (31) can be closed.

10. Sensor according to one of claims 1 to 9, characterised in that the coupling medium (14) is degasified water.

11. Sensor according to one of claims 1 to 10, characterised in that the measuring membrane (7) is electrically contacted with the aid of a clamp connection (25).

12. Sensor according to claim 11, characterised in that a measuring line (29) is soldered to the clamp connection (25).

13. Sensor according to one of claims 1 to 12, characterised in that the coupling membranes (9, 15) have a diameter of about 100 mm.

14. Sensor according to one of claims 6 to 12, characterised in that the partition (3) contains at least one passage aperture (21) for the coupling medium (14).

## Revendications

1. Capteur pour des impulsions d'ondes de choc acoustiques comportant une feuille de mesure piézoélectrique, caractérisé par le fait que la feuille de mesure (7) est disposée entre deux feuilles de couplage (9, 15), et que l'espace intercalaire (13, 19) situé entre les feuilles de couplage (9, 15) est rempli par un milieu de couplage (4) pour la transmission de l'impulsion acoustique de l'onde de choc.

2. Capteur suivant la revendication 1, caractérisé par le fait que la feuille de mesure (7) est disposée au centre entre les feuilles de couplage (9, 15).

3. Capteur suivant la revendication 1 ou 2, caractérisé par le fait que la feuille de mesure (7) est une feuille de PVDF.

4. Capteur suivant l'une des revendications 1 à 3, caractérisé par le fait qu'au moins une des feuilles de couplage (9, 15) est une feuille en caoutchouc.

5. Capteur suivant l'une des revendications 1 à 4, caractérisé par le fait que les feuilles de couplage (9, 15) sont serrées respectivement frontalement dans une bague (1).

6. Capteur suivant la revendication 5, caractérisé par le fait que l'anneau (1) contient une paroi de séparation (3) possédant une ouverture centrale (5), et que la feuille de mesure (7) recouvre cette ouverture (5).

7. Capteur suivant l'une des revendications 1 à 6, caractérisé par le fait que la surface de traversée de la feuille de mesure (7) possède un diamètre d'environ 40 mm.

8. Capteur suivant la revendication 5, 6 ou 7, caractérisé par le fait que l'anneau (1) possède une ouverture d'introduction (31) utilisée pour introduire le milieu de couplage (14).

9. Capteur suivant la revendication 8, caractérisé par le fait que l'ouverture d'introduction (31) peut être obturée.

10. Capteur suivant l'une des revendications 1 à 9, caractérisé par le fait que le milieu de couplage (14) est de l'eau dégazée.

11. Capteur suivant l'une des revendications 1 à 10, caractérisé par le fait que la feuille de mesure (7) est raccordée électriquement au moyen d'une liaison à serrage (25).

12. Capteur suivant la revendication 11, caractérisé par le fait que le conducteur de mesure (29) est fixé par soudage à la liaison à serrage (25).

13. Capteur suivant l'une des revendications 1 à 12, caractérisé par le fait que les feuilles de couplage (9, 15) possèdent un diamètre égal à environ 100 mm.

14. Capteur suivant l'une des revendications 6 à 12, caractérisé par le fait que la paroi de séparation (3) possède au moins une ouverture de passage (21) pour le milieu de couplage (14).

**FIG 1**

**FIG 2**

**FIG 3**